(19)

Europäisches Patentamt
European Patent Office
Office européen des brevets

(11) **EP 4 535 087 A1**

(12) **EUROPEAN PATENT APPLICATION**
published in accordance with Art. 153(4) EPC

(43) Date of publication:
**09.04.2025 Bulletin 2025/15**

(51) International Patent Classification (IPC):
*G03H 1/04* (2006.01)     *G03H 1/22* (2006.01)

(21) Application number: 23927852.6

(22) Date of filing: **11.09.2023**

(86) International application number:
**PCT/KR2023/013552**

(87) International publication number:
**WO 2025/037670 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.08.2023   KR 20230106739**

(71) Applicant: **WONKWANG UNIVERSITY CENTER
FOR INDUSTRY-ACADEMY
COOPERATION
Iksan-si, Jeollabuk-do 54538 (KR)**

(72) Inventors:
• **KANG, Hoon Jong**
  **Iksan-si, Jeollabuk-do 54538 (KR)**
• **CHOI, Hee Min**
  **Iksan-si, Jeollabuk-do 54553 (KR)**
• **KIM, Young Hun**
  **Iksan-si, Jeollabuk-do 54541 (KR)**

(74) Representative: **Walaski, Jan Filip et al
Venner Shipley LLP
200 Aldersgate
London EC1A 4HD (GB)**

(54)   **OBJECTIVE HOLOGRAM QUALITY EVALUATION METHOD**

(57)   There is provided a hologram quality assessment method. The quality assessment method according to an embodiment may receive an input of an original holographic fringe pattern and a target holographic fringe pattern which is a comparison target, may calculate angular spectra of the inputted original holographic fringe pattern and target holographic fringe pattern, respectively, and may calculate a PSNR as a quality value of the target holographic fringe pattern from the calculated angular spectra. Since the angular spectrum of the holographic fringe pattern has the same characteristic without a change according to a distance, not only a diffraction wavefront that is positioned at a position of the holographic fringe pattern but also a diffraction wavefront positioned at a certain distance may have the same PSNR value. Accordingly, objective quality assessment for a holographic fringe pattern is possible.

FIG. 5

**Description**

**Technical Field**

The disclosure relates to a hologram quality assessment method, and more particularly, to an objective quality assessment method for a holographic fringe pattern or a numerically reconstructed hologram reconstruction image.

**Background Art**

1. Holographic fringe pattern generation and numerical reconstruction

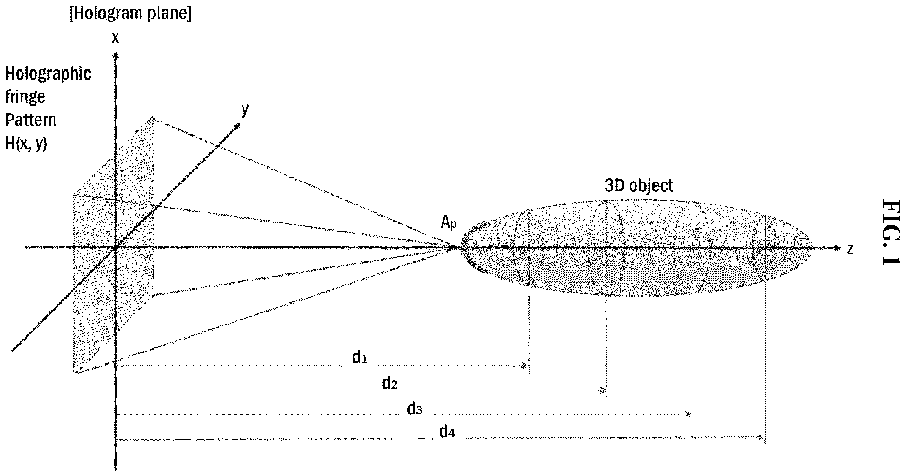

FIG. 1 illustrates a hologram plane on which a holographic fringe pattern (hologram) is positioned, and a position of a 3-dimensional (3D) object. A 3D object may be regarded as a set of points (point-cloud) having a unique amplitude and a unique phase, and light emitted from each point is propagated to a hologram plane existing on a (x,y) plane. On the hologram plane, wavefronts propagated from all points interfere with one another, thereby forming a holographic fringe pattern. The p-th point constituting a point-cloud may be expressed by $A_p = a_p exp(j\phi_p)$ which has a complex amplitude value at a 3D space position $(x_p, y_p, z_p)$, where $a_p$ is a unique amplitude and $\phi_p$ is an initial phase.
A holographic fringe pattern H (x, y) on a hologram plane (x, y) may be numerically generated by scalar diffraction, and Rayleigh-Sommerfeld integral, which is a representative method of the scalar diffraction, may be expressed by Equation 1 presented below:

[Equation 1]

$$H(x, y) = \sum_{p=1}^{N} \frac{A_p}{r_p} \cdot \exp{(jkr_p)} R_1(x, y)$$

where $r_p$ is a distance between the p-th point and (x, y) on the hologram plane, and is expressed by $r_p = \sqrt{(x - x_p)^2 + (y - y_p)^2 + z_p^2}$ , and $R_1(x, y)$ is a reference wave for recording, $k = 2\pi/\lambda$ and k is a wavenumber, and $\lambda$ is a wavelength. As indicated by Equation 1, the holographic fringe pattern is a pattern on which 3D information (position, amplitude, phase) on each point and wavelength information of light used for recording are recorded together, and 3D information may be regarded as being encoded on the holographic fringe pattern.
The encoded 3D object information may be reconstructed from the holographic fringe pattern by scalar diffraction such as Fresnel approximation or angular spectrum. For example, Fresnel approximation may be expressed by Equation 2 presented below:

[Equation 2]

$$\Gamma(x', y'; d) = \frac{j}{\lambda d} \cdot exp\left(-j \frac{2\pi}{\lambda} d\right) exp\left[-j \frac{\pi}{\lambda d}(x'^2 + y'^2)\right] \times$$

$$\iint_{-\infty}^{\infty} R_2(x, y) H(x, y) exp\left[-j \frac{\pi}{\lambda d}(x^2 + y^2)\right] \times exp\left[j \frac{2\pi}{\lambda d}(x'x + y'y)\right] dxdy$$

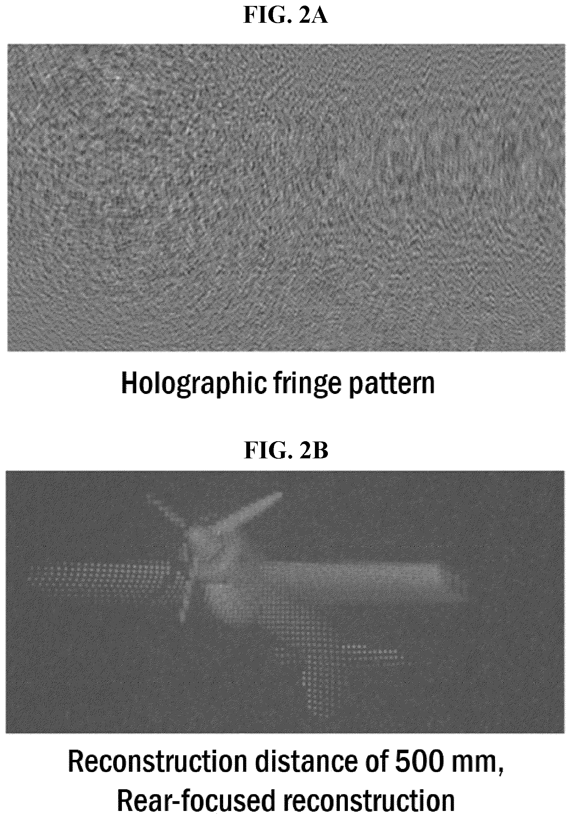

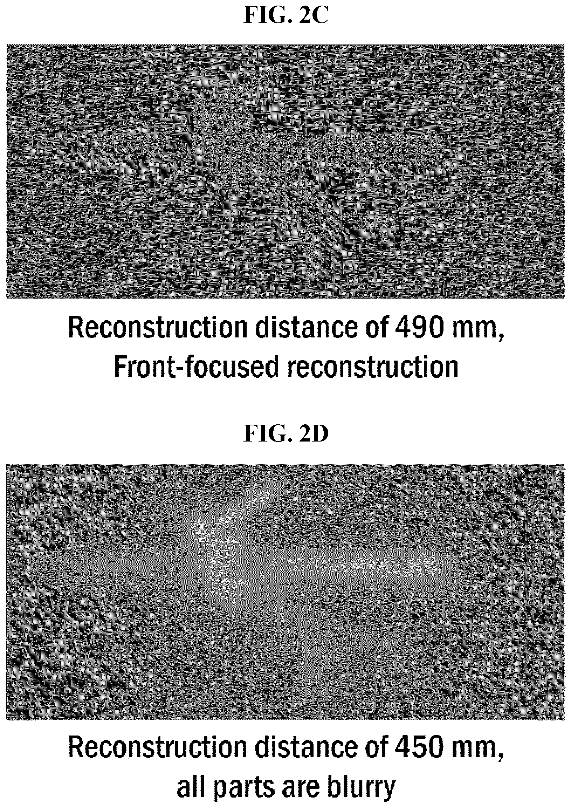

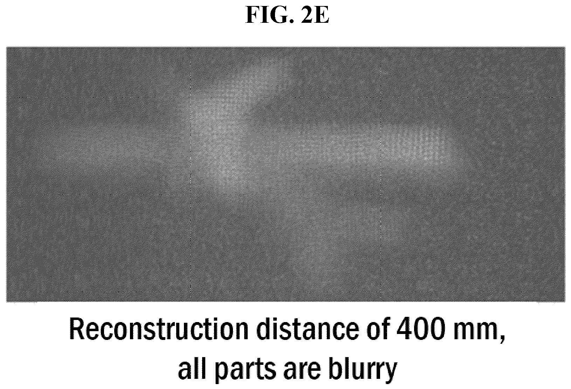

where $\Gamma(x', y'; d)$ indicates a numerical hologram reconstruction image on a plane (x', y') positioned away from a hologram plane by a distance $d$, and $R_2$ indicates a reference wave for reconstructing. Generating a holographic fringe pattern may include encoding on a 2D hologram plane by using 3D information regarding an object distributed in a 3D space, whereas a reconstructing process may be making a 2D reconstruction image on a plane positioned at a certain distance $d$ from a 2D holographic fringe pattern existing on a hologram plane. Until now, a perfect reconstruction method on a 3D space has not been suggested. For this reason, most of the digital reconstruction on holograms may refer to a 2D image.
Due to this characteristic, a numerical reconstruction image at a specific distance $d$ has the characteristic of clear reconstruction regarding an object positioned at the distance $d$, but, regarding a point or an object which is far away from the plane positioned at the distance $d$, a blur increases since its distance increases. This is because the point or object deviates from a focus-in area. An example of this is illustrated in FIG. 2A, 2B, 2C, 2D, 2E. FIG. 2A illustrates a holographic fringe pattern which is generated by Rayleigh-Sommerfeld integral, and FIGS. 2B, 2C, 2D, 2E illustrate images which are numerically reconstructed at different distances from the holographic fringe pattern. FIG. 2B illustrates a rear-focused reconstruction image, in which a rear part is clear but the other parts are out of focus and blurry, and FIG. 2C illustrates a front-focused reconstruction image in which a front part is in focus and is clear and a rear part is out of focus and is blurry. At a distance completely out of the range where a 3D object is positioned, a blur occurs in all areas, and as a distance from an object position increases, a blur increases (FIG. 2D, 2E).

2. Trend in holographic fringe pattern quality assessment

A peak signal noise ratio (PSNR) indicates power of a noise to peak power that a signal may have, and may be expressed by Equations 3 and 4 presented below:

[Equation 3]

$$PSNR = 10 log_{10}(\frac{MAX^2}{MSE})$$

[Equation 4]

$$MSE = \frac{1}{NM} \sum_{i=0}^{M-1} \sum_{j=0}^{N-1} [I(i,j) - K(i,j)]^2$$

where I(i,j) is an original image, K(i,j) is an image including a noise, MAX is a maximum value that a corresponding image has, and NM is the number of vertical pixelsxhorizontal pixels of an image. According to the above equations, a PSNR represents a difference in pixel values between two images as power. Since a difference in pixel values may be calculated, the PSNR may be widely used in the field that requires calculation of a difference in pixel values occurring according to image compression and a degree of loss after reconstruction.

With the development of technologies and expansion of utilization, there is an attempt to compress a holographic fringe pattern or change a bit rate of a holographic fringe pattern. Since a holographic fringe pattern has huge amounts of data, there is an attempt to compress data to store or transmit through various algorithms. A quality assessment process is essential for such a compression/reconstruction process.

A representative method for comparing an original holographic fringe pattern and a fringe pattern which is damaged through compression and reconstruction may use a PSNR and a structural similarity index (SSIM) which are used for image or image quality assessment. However, this method is not suggested to compare a holographic fringe pattern and may be inappropriate for use as a reference for assessing a holographic fringe pattern. Nevertheless, in the background where a PSNR and a SSIM are used for comparing a holographic fringe pattern, an appropriate quality assessment method only for a holographic fringe pattern has not yet been suggested.

**Disclosure**

**Technical Problem**

The disclosure has been developed in order to solve the above-described problems, and an object of the disclosure is to provide a method for objectively assessing quality of a holographic fringe pattern and a reconstruction image by using an angular spectrum and a peak signal noise ratio (PSNR).

**Technical Solution**

To achieve the above-described object, an objective quality assessment method according to an embodiment of the disclosure may include: receiving an input of an original holographic fringe pattern; receiving an input of a target holographic fringe pattern which is a comparison target; calculating angular spectra of the inputted original holographic fringe pattern and the target holographic fringe pattern, respectively; and calculating a quality value of the target holographic fringe pattern from the calculated angular spectra.

The target holographic fringe pattern may be a holographic fringe pattern in which a loss occurs due to adjustment in the number of bits from the original holographic fringe pattern or other factors.

The target holographic fringe pattern may be a holographic fringe pattern in which a loss occurs as the original holographic fringe pattern is reconstructed after being compressed.

The quality value of the target holographic fringe pattern may have the same value no matter where the quality value is calculated in a direction from a holographic fringe pattern toward a numerical reconstruction image.

According to the disclosure, the objective quality assessment method may further include, when an inputted holographic fringe pattern is not a holographic fringe pattern that includes a complex amplitude having an amplitude and a phase, converting the holographic fringe pattern into a holographic fringe pattern including a complex amplitude.

When the holographic fringe pattern is not the holographic fringe pattern including the complex amplitude, the holographic fringe pattern may be a holographic fringe pattern that includes only an amplitude or only a phase.

Calculating may include calculating the quality value of the target holographic fringe pattern by obtaining absolute values of the calculated angular spectra and calculating PSNR values.

Calculating may include

calculating angular spectra, respectively, by using the following equations:

$$A_{ref}(f_X, f_Y) = \iint_{-\infty}^{\infty} H_{ref}(x, y) exp[-j2\pi(f_X x + f_Y y)]dxdy$$

$$A_{tar}(f_X, f_Y) = \iint_{-\infty}^{\infty} H_{tar}(x, y) exp[-j2\pi(f_X x + f_Y y)]dxdy$$

where $A_{ref}(f_X, f_Y)$ is an angular spectrum of the original holographic fringe pattern,
$A_{tar}(f_X, f_Y)$ is an angular spectrum of the target holographic fringe pattern,
$H_{ref}(x, y)$ is the original holographic fringe pattern,
$H_{tar}(x, y)$ is the target holographic fringe pattern, and
$f_X$ and $f_Y$ are spatial frequencies.

Calculating may include

calculating a PSNR value by using the following equations:

$$PSNR = 10 \log_{10}\left(\frac{MAX^2}{MSE}\right)$$

$$MSE = \frac{1}{NM} \sum_{i=0}^{M-1} \sum_{j=0}^{N-1} \left[|A_{ref}(f_X, f_Y)| - |A_{tar}(f_X, f_Y)|\right]^2$$

where MAX is a maximum value of a holographic fringe pattern,

an absolute value |A| of a complex amplitude $A = \alpha + j\beta$ is calculated by $\sqrt{\alpha^2 + \beta^2}$, and
NM is the number of vertical pixels × horizontal pixels.

According to another aspect of the disclosure, an objective quality assessment system may include: a processor configured to receive an input of an original holographic fringe pattern and a target holographic fringe pattern which is a comparison target, to calculate angular spectra of the inputted original holographic fringe pattern and target holographic fringe pattern, respectively, and to calculate a quality value of the target holographic fringe pattern from the calculated angular spectra; and a storage unit configured to provide a storage space necessary for the processor.

**Advantageous Effects**

As described above, according to embodiments of the disclosure, an angular spectrum for a holographic fringe pattern may be calculated, and a PSNR may be calculated for the angular spectrum. Since the angular spectrum has the same characteristic without a change according to a distance, not only a diffraction wavefront that is positioned at a position of a holographic fringe pattern but also a diffraction wavefront positioned at a certain distance may have the same PSNR value. Accordingly, objective quality assessment for a holographic fringe pattern is possible.

**Description of Drawings**

FIG. 1 is a view illustrating a relationship between a hologram plane and an object plane;

FIG. 2 is a view illustrating a holographic fringe pattern and a numerical reconstruction image reconstructed by Fresnel approximation according to a distance;

FIG. 3 is a view illustrating (a) diffraction wavefront propagation images (digital reconstruction images) at a holographic fringe pattern position and propagation distances $d_1$ and $d_2$ from the holographic fringe pattern, (b) a Fourier spectrum at each position, and (c) an angular spectrum at each position;

FIG. 4 is a view illustrating a related-art objective quality assessment method regarding a holographic fringe pattern;

FIG. 5 is a view illustrating an objective quality assessment method for a holographic fringe pattern which uses an angular spectrum according to an embodiment of the disclosure;

FIG. 6 is a view illustrating an objective quality assessment method for a holographic fringe pattern which uses an angular spectrum according to another embodiment of the disclosure;

FIG. 7 is a view illustrating PSNRs regarding a holographic fringe pattern, digital reconstruction, and an angular spectrum;

FIG. 8 is a view illustrating an objective quality assessment system for a holographic fringe pattern which uses an angular spectrum according to still another embodiment of the disclosure.

**Best Mode**

Hereinafter, the disclosure will be described in more detail with reference to the accompanying drawings.
Embodiments of the disclosure provide an objective hologram quality assessment method. The disclosure relates to a technology for assessing quality of a holographic fringe pattern or a hologram reconstruction image which is numerically reconstructed.

1. Objective quality assessment requirements for holographic fringe pattern and numerical reconstruction image

In order to objectively assess quality of a holographic fringe pattern, the following requirements should be satisfied.

(1) Objective quality assessment for a holographic fringe pattern or a numerical reconstruction image should be performed irrespective of a holographic display. Since a specific parameter (a wavelength, a pixel-interval, etc.) of a holographic display system is included in a holographic fringe pattern, compatibility on holographic contents between holographic displays having different system parameters may be low.

(2) A quality assessment method for a holographic fringe pattern and a numerical reconstruction image should be the same and should obtain the same result. Since a holographic fringe pattern and a numerical reconstruction image have the same information on a 3D object, a quality assessment method for the holographic fringe pattern and the numerical reconstruction image should be the same and should obtain the same quality assessment result.

(3) Objective quality assessment should bring about the same result no matter where assessment is performed in a direction from a holographic fringe pattern toward a numerical reconstruction image, up to infinite distances.

(4) Quality assessment of any type of holographic fringe pattern including a complex amplitude hologram, an amplitude hologram, a phase hologram should be possible.

2. Characteristics of angular spectrum

A Fourier spectrum is a frequency spectrum on a 2D plane having a certain pattern, and may be expressed by a combination of various harmonic waves having a unique amplitude and a unique frequency. As a similar method to the Fourier spectrum method, an angular spectrum method may show that a 2D plane having a certain pattern is expressed by a combination of various plane waves having a single wavelength and entering with a unique amplitude and a unique angle.

A typical photoelectron holographic display system displays a holographic fringe pattern on a spatial light modulator, and allows a reference wave to enter the spatial light modulator. The incident reference wave may be diffracted by the fringe pattern, thereby forming a 3D object on a free space. **In** this case, an angular spectrum $A(\alpha/\lambda,\ \beta/\lambda\ ;0)$ on the holographic fringe pattern H(x,y;0) displayed on the spatial light modulator may be expressed by Equation 5 presented below:

[Equation 5]

$$A\left(\frac{\alpha}{\lambda},\frac{\beta}{\lambda};0\right) = \iint_{-\infty}^{\infty} H(x,y;0)exp\left[-j2\pi\left(\frac{\alpha}{\lambda}x+\frac{\beta}{\lambda}y\right)\right]dxdy =$$

$$\iint_{-\infty}^{\infty} H(x,y;0)exp[-j2\pi(f_X x + f_Y y)]dxdy\ldots$$

where $\lambda$ is a wavelength of a plane wave, $(\alpha, \beta, \gamma)$ is a direction cosine, and $f_X$ and $f_Y$ are spatial frequencies, and a direction cosine may have a relationship expressed by Equation 6 presented below:

[Equation 6]

$$\alpha = \lambda f_X, \beta = \lambda f_Y, \gamma = \sqrt{1-(\lambda f_X)^2 - (\lambda f_Y)^2}$$

An angular spectrum $A(\alpha/\lambda,\beta/\lambda;d)$ at a distance $d$ from the holographic fringe pattern may be expressed by Equation 7 presented below:

[Equation 7]

$$A\left(\frac{\alpha}{\lambda},\frac{\beta}{\lambda};d\right) = A\left(\frac{\alpha}{\lambda},\frac{\beta}{\lambda};0\right)exp\left(j\frac{2\pi}{\lambda}\sqrt{1-\alpha^2-\beta^2}d\right)$$

A diffraction wavefront or numerical reconstruction image $H(x, y; d)$ at a position spaced away from the holographic fringe pattern by a distance d may be expressed by Equation 8 presented below:

[Equation 8]

$$H(\xi,\eta;d) = \iint_{-\infty}^{\infty} A\left(\frac{\alpha}{\lambda},\frac{\beta}{\lambda};0\right)exp\left(j\frac{2\pi}{\lambda}\sqrt{1-\alpha^2-\beta^2}d\right)\times$$

$$C\left(\sqrt{\alpha^2+\beta^2}\right)exp\left[j2\pi\left(\frac{\alpha}{\lambda}x+\frac{\beta}{\lambda}y\right)\right]d\frac{\alpha}{\lambda}d\frac{\beta}{\lambda} =$$

$$\iint_{-\infty}^{\infty} A(f_X,f_Y;0)C\left(\sqrt{(\lambda f_X)^2 + (\lambda f_Y)^2}\right)\times exp\left[j\frac{2\pi}{\lambda}\sqrt{1-(\lambda f_X)^2-(\lambda f_Y)^2}d\right]\times$$

$$exp[j2\pi(f_X x + f_Y y)]\,df_X df_Y$$

where $C\left(\sqrt{\alpha^2+\beta^2}\right)$ is a circle function.

Objective hologram quality assessment method

A holographic fringe pattern is configured as a pattern for diffracting light, and may be generated by using Scalar

**EP 4 535 087 A1**

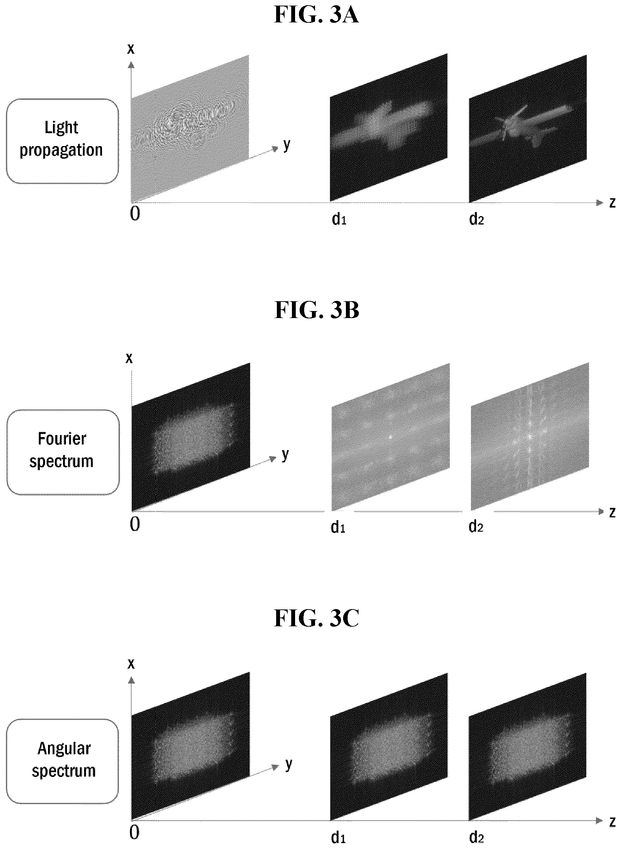

diffraction such as Rayleigh-Sommerfeld integral, such that diffracted wavefronts constitute a 3D object at a certain distance. When a reference wave enters a holographic fringe pattern generated or obtained by a camera, the reference wave is diffracted by the holographic fringe pattern and a 3D object used at the time of generating the holographic fringe pattern is optically or numerically reconstructed at a predetermined distance (for example, a distance $d_2$) as shown in FIG. 3A. However, at a distance (for example, a distance $d_1$) different from the position of the 3D Object, a defocused and unclear image may be reconstructed.

FIG. 3B illustrates a Fourier spectrum method regarding a holographic fringe pattern and numerical reconstruction images at distances 0, di, $d_2$. Since a Fourier spectrum indicates a spatial frequency distribution of various harmonic waves on a corresponding image, the Fourier spectra of the holographic fringe pattern and the reconstructed images may have different distributions according to distances.

Lastly, an angular spectrum shown in FIG. 3C shows an incident angle distribution of various plane waves on a corresponding image. Since the angular spectrum is linear and is a distance invariant system, the angular spectra of a holographic fringe pattern and reconstructed images at respective distances may have the same distribution. This is because an absolute value of an angular spectrum at a distance 0 and an absolute value of an angular spectrum at a distance $d$ are the same as shown in Equation 9 presented below:

[Equation 9]

$$\left| A\left(\frac{\alpha}{\lambda}, \frac{\beta}{\lambda}; d\right) \right| = \left| A\left(\frac{\alpha}{\lambda}, \frac{\beta}{\lambda}; 0\right) exp\left(j\frac{2\pi}{\lambda}\sqrt{1-\alpha^2-\beta^2}d\right) \right| = \left| A\left(\frac{\alpha}{\lambda}, \frac{\beta}{\lambda}; 0\right) \right|$$

Equation 9 may imply the following features. A reference wave entering a holographic fringe patten is diffracted and propagates, and information on an advancing direction of diffracted wavefronts may be expressed by an angular spectrum, and, since the advancing direction information does not change during propagation in the z-axis direction, the same angular spectrum is obtained at any distance.

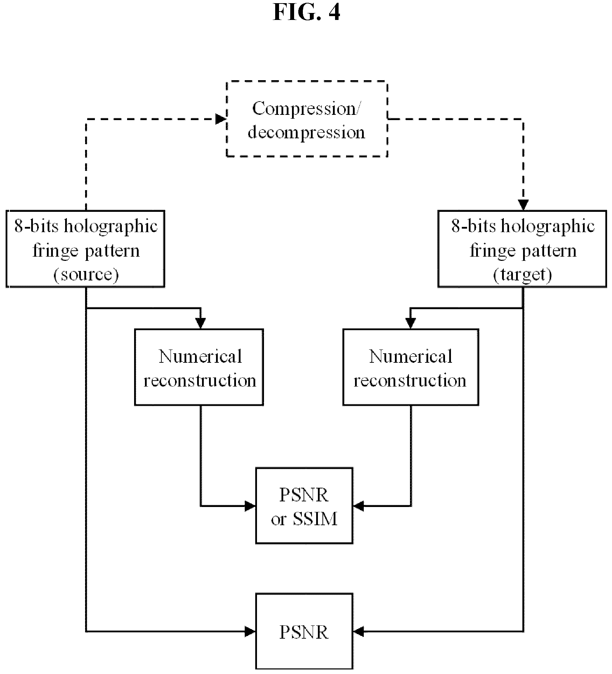

FIG. 4 is a flowchart of a related-art objective quality assessment method using a holographic fringe pattern or a numerical reconstruction image related thereto. In related-art methods, a PSNR may be used to assess a degree of deterioration of quality after a holographic fringe pattern is compressed and reconstructed, and a holographic fringe pattern or a numerical reconstruction image is independently used as an object for calculating a PSNR. However, although the two images include the same information, they have different PSNR resulting values since their focused parts are different according to a reconstruction distance. Using a Fourier spectrum on a holographic fringe pattern or a numerical reconstruction image to assess quality may not be appropriate as an objective quality assessment method.

However, the angular spectrum has a distance invariant characteristic and thus may be appropriate for objective quality assessment on a holographic fringe pattern and a numerical reconstruction image.

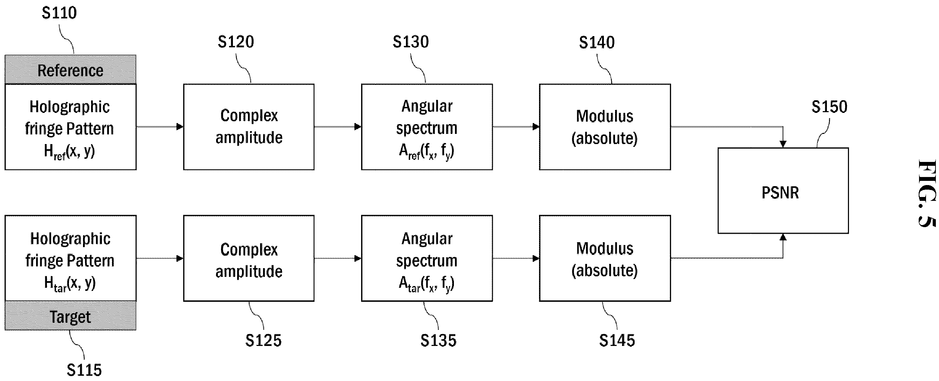

FIG. 5 is a flowchart provided to explain an objective quality assessment method for a holographic fringe pattern which uses an angular spectrum according to an embodiment of the disclosure.

As shown in FIG. 5, an original holographic fringe pattern $H_{ref}(x,y)$ which is used as a reference, and a target holographic fringe pattern $H_{tar}(x,y)$ which loses information or has a damaged pattern and is a comparison target are inputted (S110, S115).

A fringe pattern may be comprised of an amplitude only, a phase only, or a complex amplitude, and, when the fringe pattern is comprised of an amplitude only or a phase only, the fringe pattern may be converted into a complex amplitude having an amplitude and a phase (S120, S125).

With respect to the converted complex amplitudes, an angular spectrum $A_{ref}(f_X, f_Y)$ and an angular spectrum $A_{tar}(f_X, f_Y)$ are calculated according to Equation 10 presented below (S130, S135).

[Equation 10]

$$A_{ref}(f_X, f_Y) = \iint_{-\infty}^{\infty} H_{ref}(x,y)exp[-j2\pi(f_X x + f_Y y)]dxdy$$

$$A_{tar}(f_X, f_Y) = \iint_{-\infty}^{\infty} H_{tar}(x,y)exp[-j2\pi(f_X x + f_Y y)]dxdy$$

Next, absolute values of the calculated angular spectra are obtained (S140, S145), and a PSNR value may be calculated according to Equation 10 presented below at a final stage (S150).

7

[Equation 11]

$$PSNR = 10\log_{10}\left(\frac{MAX^2}{MSE}\right)$$

$$MSE = \frac{1}{NM}\sum_{i=0}^{M-1}\sum_{j=0}^{N-1}\left[\left|A_{ref}(f_X, f_Y)\right| - \left|A_{tar}(f_X, f_Y)\right|\right]^2$$

where MAX is a maximum value of a holographic fringe pattern, and MSE is a mean squared error. An absolute value $|A|$ regarding a complex amplitude $A = \alpha + j\beta$ may be calculated by $\sqrt{\alpha^2 + \beta^2}$. Through the above-described process, objective quality assessment between the original holographic fringe pattern and the target holographic fringe pattern is performed.

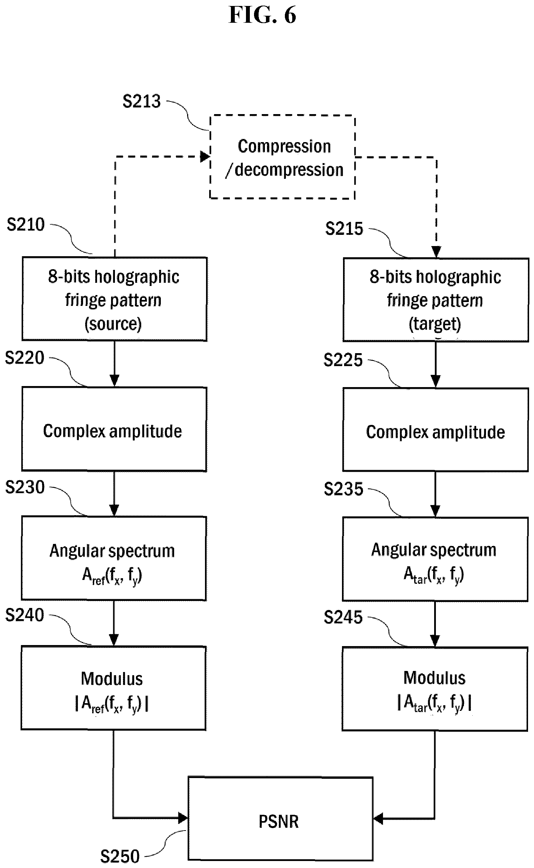

FIG. 6 is a flowchart provided to explain an objective quality assessment method for a holographic fringe pattern which uses an angular spectrum according to another embodiment of the disclosure.

In the objective quality assessment method proposed herein, it is assumed that a holographic fringe pattern obtained after an original holographic fringe pattern $H_{ref}(x,y)$ is compressed and decompressed (S213) is inputted as a target holographic fringe pattern $H_{tar}(x,y)$.

Steps S210 to S250 are substantially the same as steps S110 to S150 illustrated in FIG. 5, and thus a detailed description thereof is omitted.

4. Experiment result

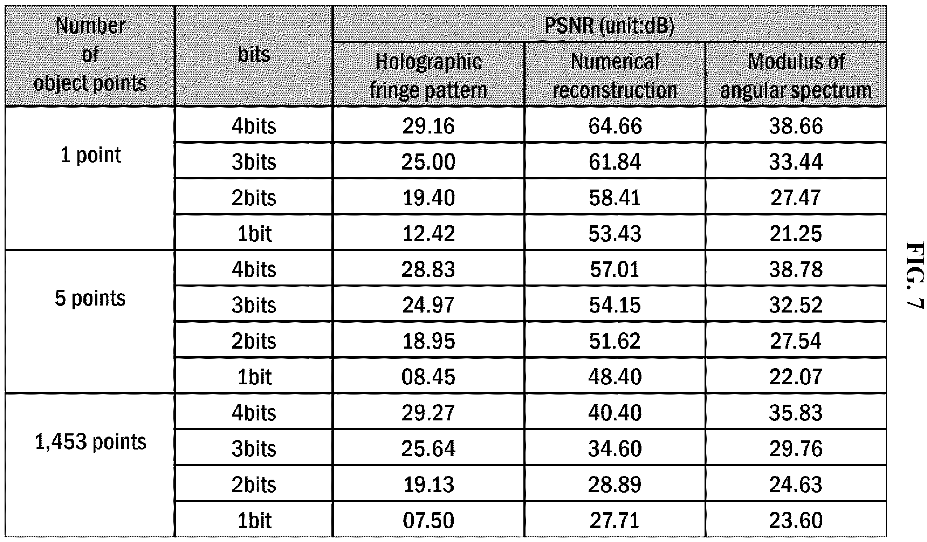

A result of experimenting an objective quality assessment method according to an embodiment is illustrated in FIG. 7. Three types of 3D objects, a single-point object, a five-point object, and a 1,453-point object which constitutes the airplane shown in FIG. 2, were used. A holographic fringe pattern used as a reference was generated by using Rayleigh-Sommerfeld integral expressed by Equation 1, and was converted into an 8 bits gray scale image and was used. The number of bits was adjusted to 4 bits, 3 bits, 2 bits, 1 bit in order to artificially damage a target holographic fringe pattern. For example, a 1-bit holographic fringe pattern becomes a binary pattern. Through this process, five holographic fringe patterns including a reference pattern were prepared for each object. A numerical reconstruction image was prepared from the generated holographic fringe pattern according to Equation 8. An absolute value of an angular spectrum on each of the generated holographic fringe patterns was prepared by Equations 10, 11.

A PSNR was calculated by using target images prepared through the above-described process and reference images.

As shown in FIG. 7, distributions of PSNR values of a holographic fringe pattern and a numerical reconstruction image are different from one another although the holographic fringe pattern and the numerical reconstruction image include the same information. The PSNR of the holographic fringe pattern may be relatively lower than that of the numerical reconstruction image. The numerical reconstruction image has a PSNR of a relatively high value, and the PSNR of the numerical reconstruction image decreases as the number of points increases. However, the PSNR regarding the absolute value of the angular spectrum may indicate a relatively appropriate PSNR distribution. As the number of bits decreases, the PSNR value may decrease, and a similar distribution is shown even as the number of points increases. Since the absolute values of the angular spectra on the holographic fringe pattern and the numerical reconstruction image are the same, there is no need to calculate PSNRs independently. Through this experiment, it is seen that a method of calculating a PSNR on a holographic fringe pattern and a numerical reconstruction image results in different distributions according to various factors such as the number of points and thus it is difficult to perform stable quality assessment. However, the method according to an embodiment of the disclosure is not influenced by a change in various factors such as a change in the number of points, and may achieve a stable quality assessment result.

5. Objective hologram quality assessment system

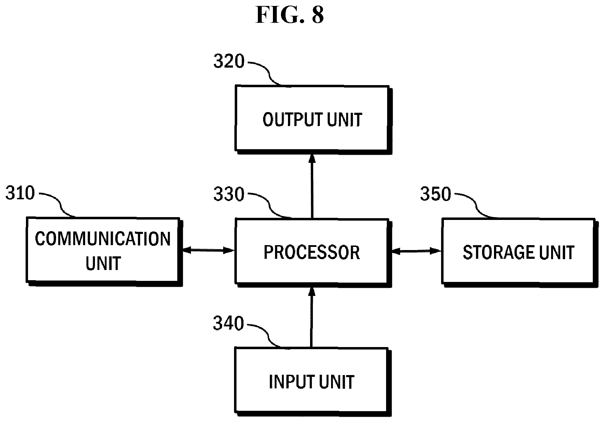

FIG. 8 is a view illustrating a configuration of an objective quality assessment system for a holographic fringe pattern which uses an angular spectrum according to still another embodiment of the disclosure. As shown in FIG. 8, the objective quality assessment system according to an embodiment may be implemented by a computing system which includes a communication unit 310, an output unit 320, a processor 330, an input unit 340, and a storage unit 350.

The communication unit 310 may be a communication means for connecting communication with an external device and accessing an external network. The output unit 320 may output a result of calculating by the processor 330, and the input unit 340 transmits a user command to the processor 330. The storage unit 350 provides a storage space necessary for calculating by the processor 330.

As proposed in FIGS. 5 and 6, the processor 330 may perform objective quality assessment with respect to a holographic fringe pattern by using an angular spectrum, and may output the result of the assessment through the output unit 320 or may transmit the result through the communication unit 310.

6. Variation

Up to now, a method for objectively assessing quality of a holographic fringe pattern and a reconstruction image by using an angular spectrum and a PSNR has been described in detail with reference to preferred embodiments.

A related-art hologram quality assessment method may use a PSNR for the purpose of numerical quality assessment for a holographic fringe pattern or a numerical reconstruction image. However, in related-art methods, a holographic fringe pattern and a numerical reconstruction image therefor may have different PSNR values, and focus-defocus areas may be different according to where reconstruction is performed, and to this end, different PSNR values may be calculated. Due to these characteristics, a PSNR which has been used for objective quality assessment on images is inappropriate for hologram quality assessment.

In embodiments of the disclosure, an angular spectrum for a holographic fringe pattern is calculated, and a PSNR is calculated for the angular spectrum. Since the angular spectrum has an input of a complex amplitude, the angular spectrum is applicable to an amplitude-only or phase-only hologram fringe pattern, and, since the angular spectrum is a distance invariant system, it has the same characteristic without a change according to a distance. Accordingly, not only a diffraction wavefront that is positioned at a position of a holographic fringe pattern but also a diffraction wavefront positioned at a certain distance may have the same PSNR value.

In prior art, there has been no appropriate method for objective quality assessment on a holographic fringe pattern, but a method for performing objective quality assessment is proposed in the disclosure, and it is expected that the method is utilized in various hologram content application fields.

In the above-described embodiments, a PSNR value is calculated based on absolute values of angular spectra of an original holographic fringe pattern and a target holographic fringe pattern, that is, amplitudes of angular spectra. Here, the amplitude of the angular spectrum may be replaced with a phase of the angular spectrum, and even in this case, the technical concept of the disclosure may be applied.

The technical concept of the disclosure may be applied to a computer-readable recording medium which records a computer program for performing the functions of the apparatus and the method according to the present embodiments. In addition, the technical idea according to various embodiments of the disclosure may be implemented in the form of a computer readable code recorded on the computer-readable recording medium. The computer-readable recording medium may be any data storage device that can be read by a computer and can store data. For example, the computer-readable recording medium may be a read only memory (ROM), a random access memory (RAM), a CD-ROM, a magnetic tape, a floppy disk, an optical disk, a hard disk drive, or the like. A computer readable code or program that is stored in the computer readable recording medium may be transmitted via a network connected between computers.

In addition, while preferred embodiments of the present disclosure have been illustrated and described, the present disclosure is not limited to the above-described specific embodiments. Various changes can be made by a person skilled in the at without departing from the scope of the present disclosure claimed in claims, and also, changed embodiments should not be understood as being separate from the technical idea or prospect of the present disclosure.

**Claims**

1. An objective quality assessment method comprising:

   receiving an input of an original holographic fringe pattern;
   receiving an input of a target holographic fringe pattern which is a comparison target;
   calculating angular spectra of the inputted original holographic fringe pattern and the target holographic fringe pattern, respectively; and
   calculating a quality value of the target holographic fringe pattern from the calculated angular spectra.

2. The objective quality assessment method of claim 1, wherein the target holographic fringe pattern is a holographic fringe pattern in which a loss occurs due to adjustment in the number of bits from the original holographic fringe pattern.

3. The objective quality assessment method of claim 2, wherein the target holographic fringe pattern is a holographic fringe pattern in which a loss occurs as the original holographic fringe pattern is reconstructed after being compressed.

4. The objective quality assessment method of claim 2, wherein the quality value of the target holographic fringe pattern has the same value no matter where the quality value is calculated in a direction from a holographic fringe pattern toward a numerical reconstruction image.

5. The objective quality assessment method of claim 1, further comprising, when an inputted holographic fringe pattern is not a holographic fringe pattern that includes a complex amplitude having an amplitude and a phase, converting the holographic fringe pattern into a holographic fringe pattern including a complex amplitude.

6. The objective quality assessment method of claim 5, wherein, when the holographic fringe pattern is not the holographic fringe pattern including the complex amplitude, the holographic fringe pattern is a holographic fringe pattern that includes only an amplitude or only a phase.

7. The objective quality assessment method of claim 1, wherein calculating comprises calculating the quality value of the target holographic fringe pattern by obtaining absolute values of the calculated angular spectra and calculating PSNR values.

8. The objective quality assessment method of claim 7, wherein calculating comprises calculating angular spectra, respectively, by using the following equations:

$$A_{ref}(f_X, f_Y) = \iint_{-\infty}^{\infty} H_{ref}(x,y) exp[-j2\pi(f_X x + f_Y y)] dx dy$$

$$A_{tar}(f_X, f_Y) = \iint_{-\infty}^{\infty} H_{tar}(x,y) exp[-j2\pi(f_X x + f_Y y)] dx dy$$

where $A_{ref}(f_X, f_Y)$ is an angular spectrum of the original holographic fringe pattern, $A_{tar}(f_X, f_Y)$ is an angular spectrum of the target holographic fringe pattern, $H_{ref}(x,y)$ is the original holographic fringe pattern, $H_{tar}(x,y)$ is the target holographic fringe pattern, and $f_X$ and $f_Y$ are spatial frequencies.

9. The objective quality assessment method of claim 8, wherein calculating comprises calculating a PSNR value by using the following equations:

$$PSNR = 10 \log_{10} \left( \frac{MAX^2}{MSE} \right)$$

$$MSE = \frac{1}{NM} \sum_{i=0}^{M-1} \sum_{j=0}^{N-1} \left[ |A_{ref}(f_X, f_Y)| - |A_{tar}(f_X, f_Y)| \right]^2$$

where MAX is a maximum value of a holographic fringe pattern, an absolute value $|A|$ of a complex amplitude $A = \alpha + j\beta$ is calculated by $\sqrt{\alpha^2 + \beta^2}$, and NM is the number of vertical pixels $\times$ horizontal pixels.

10. An objective quality assessment system comprising:

a processor configured to receive an input of an original holographic fringe pattern and a target holographic fringe pattern which is a comparison target, to calculate angular spectra of the inputted original holographic fringe pattern and target holographic fringe pattern, respectively, and to calculate a quality value of the target holographic fringe pattern from the calculated angular spectra; and
a storage unit configured to provide a storage space necessary for the processor.

# FIG. 1

**FIG. 2A**

Holographic fringe pattern

**FIG. 2B**

Reconstruction distance of 500 mm,
Rear-focused reconstruction

**FIG. 2C**

Reconstruction distance of 490 mm,
Front-focused reconstruction

**FIG. 2D**

Reconstruction distance of 450 mm,
all parts are blurry

FIG. 2E

Reconstruction distance of 400 mm,
all parts are blurry

# FIG. 3A

# FIG. 3B

# FIG. 3C

# FIG. 4

# FIG. 5

# FIG. 6

## FIG. 7

| Number of object points | bits | PSNR (unit:dB) | | |
|---|---|---|---|---|
| | | Holographic fringe pattern | Numerical reconstruction | Modulus of angular spectrum |
| 1 point | 4bits | 29.16 | 64.66 | 38.66 |
| | 3bits | 25.00 | 61.84 | 33.44 |
| | 2bits | 19.40 | 58.41 | 27.47 |
| | 1bit | 12.42 | 53.43 | 21.25 |
| 5 points | 4bits | 28.83 | 57.01 | 38.78 |
| | 3bits | 24.97 | 54.15 | 32.52 |
| | 2bits | 18.95 | 51.62 | 27.54 |
| | 1bit | 08.45 | 48.40 | 22.07 |
| 1,453 points | 4bits | 29.27 | 40.40 | 35.83 |
| | 3bits | 25.64 | 34.60 | 29.76 |
| | 2bits | 19.13 | 28.89 | 24.63 |
| | 1bit | 07.50 | 27.71 | 23.60 |

## FIG. 8

## INTERNATIONAL SEARCH REPORT

| International application No. |
| --- |
| **PCT/KR2023/013552** |

| A. | CLASSIFICATION OF SUBJECT MATTER |
| --- | --- |
| | **G03H 1/04**(2006.01)i; **G03H 1/22**(2006.01)i |

According to International Patent Classification (IPC) or to both national classification and IPC

| B. | FIELDS SEARCHED |
| --- | --- |

Minimum documentation searched (classification system followed by classification symbols)

G03H 1/04(2006.01); G01B 9/021(2006.01); G01N 21/88(2006.01); G03H 1/08(2006.01); G03H 1/22(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 홀로그램(hologram), 품질(quality), 평가(evaluation), angular spectrum, 비교 (compare), 프린지 패턴(fringe pattern)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y<br><br>A | 이재홍 등. 회절연산 정밀도에 따른 CGH 기반 홀로그램 생성 품질 분석. 방송공학회논문지. vol. 28, no. 1, 31 January 2023 (LEE, Jaehong et al. Quality Analysis on Computer Generated Hologram Depending on the Precision on Diffraction Computation. Journal of Broadcast Engineering).<br>　　[Retrieved on 08 April 2024]. Retrieved from <URL: https://www.kibme.org/resources/ journal/20230217143351299.pdf>.<br>　　See abstract; pages 24-25; and figure 3. | 1,5-7,10<br><br>2-4,8-9 |
| Y | KR 10-2016-0019308 A (ELECTRONICS AND TELECOMMUNICATIONS RESEARCH INSTITUTE) 19 February 2016 (2016-02-19)<br>　　See paragraph [0023]; and claims 1-2. | 1,5-7,10 |
| A | KR 10-2019-0072020 A (NAEILHAE, CO., LTD.) 25 June 2019 (2019-06-25)<br>　　See paragraphs [0072]-[0092]; and figure 3. | 1-10 |
| A | KR 10-2021-0141268 A (ELECTRONICS AND TELECOMMUNICATIONS RESEARCH INSTITUTE) 23 November 2021 (2021-11-23)<br>　　See claims 1-9. | 1-10 |

✓ Further documents are listed in the continuation of Box C.    ✓ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 May 2024** | **02 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/013552** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2022-0085626 A (INHA UNIVERSITY RESEARCH AND BUSINESS FOUNDATION) 22 June 2022 (2022-06-22)<br>    See claims 1-2; and figure 2. | 1-10 |

Form PCT/ISA/210 (second sheet) (July 2022)

**INTERNATIONAL SEARCH REPORT**
Information on patent family members

International application No.

**PCT/KR2023/013552**

| Patent document cited in search report | | | Publication date (day/month/year) | Patent family member(s) | | | Publication date (day/month/year) |
|---|---|---|---|---|---|---|---|
| KR | 10-2016-0019308 | A | 19 February 2016 | KR | 10-2083875 | B1 | 03 March 2020 |
| | | | | US | 2016-0040983 | A1 | 11 February 2016 |
| | | | | US | 9500470 | B2 | 22 November 2016 |
| KR | 10-2019-0072020 | A | 25 June 2019 | None | | | |
| KR | 10-2021-0141268 | A | 23 November 2021 | None | | | |
| KR | 10-2022-0085626 | A | 22 June 2022 | KR | 10-2495567 | B1 | 06 February 2023 |

Form PCT/ISA/210 (patent family annex) (July 2022)